# EUROPÄISCHE PATENTANMELDUNG

(11) **EP 3 300 220 A1**
(43) Veröffentlichungstag der Anmeldung: **28.03.2018**
(21) Anmeldenummer: 16190795.1
(22) Anmeldetag: 27.09.2016
(51) Int. Cl.: H02K 5/136, H02K 9/04, H02K 5/20

(54) **ELEKTRISCHE MASCHINE MIT INTEGRIERTEM ÜBERDRUCKSYSTEM**

(71) Anmelder: Siemens Aktiengesellschaft, 80333 München (DE)
(72) Erfinder: Cepek, Thomas, 12487 Berlin (DE)

(57) **Zusammenfassung**

Die Erfindung betrifft eine elektrische Maschine (1) insbesondere für den Einsatz in explosionsgefährdetem Bereichen mit einem Überdrucksystem (2) zum Herausdrücken von zündfähigen Gasen aus einem Innenraum (3) der elektrischen Maschine (1). Für eine aufwandsarme Realisierung des Überdrucksystems (1) wird vorgeschlagen, dass das Überdrucksystem (2) mindestens einen Hohlraum der elektrischen Maschine (1) der elektrischen Maschine (1) umfasst. Bei einer vorteilhaften Ausgestaltungsform umfasst das Überdrucksystem (2) den Längsholm (4) der elektrischen Maschine (1).

## Beschreibung

Die Erfindung betrifft eine elektrische Maschine insbesondere für den Einsatz in explosionsgefährdetem Bereichen mit einem Überdrucksystem zum Herausdrücken von zündfähigen Gasen aus einem Innenraum der elektrischen Maschine.

Die Erfindung betrifft weiter ein Verfahren zur Verteilung von Spülluft innerhalb einer elektrischen Maschine insbesondere für den Einsatz in explosionsgefährdetem Bereichen, wobei mittels eines Überdrucksystems insbesondere zündfähige Gasen aus einem Innenraum der elektrischen Maschine herausgedrückt werden.

Eine derartige elektrische Maschine mit integriertem Überdrucksystem kommt beispielsweise in explosionsgefährdeten Bereichen zum Einsatz. Hierzu werden elektrische Maschinen beispielsweise mit einen separaten an die elektrische Maschine angebauten Überdrucksystem ausgerüstet. Die Aufgabe derartiger Überdrucksysteme ist es, mit Überdruck vor Inbetriebnahme der Maschine zündfähige Gase aus dem Innenraum der Maschinen zu entfernen bzw. zu spülen und auch beim Betrieb der elektrischen Maschine derartige zündfähige Gase aus dem Innenraum der Maschine fernzuhalten. In der Regel wird hierzu ein Schutzgas mengenreguliert in die einzelnen Spülluftbereiche der Maschine geführt. Für die Bereitstellung des Überdrucksystems wurden bisher beispielsweise Verteilrohre mit separaten Kugelhahnventilen zur jeweiligen Einstellung der Spülluftmenge verwendet.

Der Erfindung liegt die Aufgabe zu Grunde, eine elektrische Maschine mit einem möglichst aufwandsarmen und damit kostengünstigen Überdrucksystem anzugeben.

Diese Aufgabe wird durch eine elektrische Maschine insbesondere für den Einsatz in explosionsgefährdetem Bereichen mit einem Überdrucksystem zum Herausdrücken von zündfähigen Gasen aus einem Innenraum der elektrischen Maschine gelöst, wobei das Überdrucksystem mindestens einen Hohlraum der elektrischen Maschine umfasst.

Diese Aufgabe wird weiter durch ein Verfahren zur Verteilung von Spülluft innerhalb einer Elektrische Maschine insbesondere für den Einsatz in explosionsgefährdetem Bereichen gelöst, wobei mittels eines Überdrucksystem insbesondere zündfähige Gasen aus einem Innenraum der elektrischen Maschine herausgedrückt werden, wobei das Überdrucksystem mindestens einen Hohlraum der elektrischen Maschine der elektrischen Maschine als Spülluftverteilung nutzt.

Der Erfindung liegt die Erkenntnis zugrunde, dass der hohe Aufwand für ein separates Überdrucksystem zur Spülluftverteilung der elektrischen Maschine dadurch deutlich reduziert werden kann, dass Bauteile der elektrischen Maschine, die ohnehin vorhanden sind, als Verteilsystem für die Spülluft genutzt werden. Ein wesentliches Element für die Verteilung der Spülluft ist dabei ein ohnehin vorhandener Hohlraum, beispielsweise ein Längs- und/oder ein Querholm der elektrischen Maschine. Für die Zuführung der Spülluft ist somit lediglich ein Einlass an der elektrischen Maschine, beispielsweise an einen zentralen Hohlraum erforderlich, wobei von diesem Hohlraum aus eine Weiterverteilung der Spülluft innerhalb der elektrischen Maschine an jeweilige Zielobjekte erfolgen kann. Eine separate insbesondere externe Montage eines Überdrucksystems zur Verteilung der Spülluft ist somit nicht erforderlich. Dies führt zu einer Verringerung bei den Herstellungskosten der elektrischen Maschine mit Überdrucksystem sowie auch zu einer Einsparung an Materialkosten.

Vorteilhafte Ausgestaltungsformen sind in den Unteransprüchen enthalten.

Eine sehr einfache und kostengünstige bauliche Realisierung eines Spülluftverteilsystems für die elektrische Maschine kann dadurch erzielt werden, dass das Überdrucksystem den Längsholm der elektrischen Maschine umfasst. Durch die Nutzung des ohnehin vorhandenen Längsholms der elektrischen Maschine kann eine ansonsten erforderliche zusätzliche aufwendige eigene Verrohrung für die Spülluftverteilung entfallen. Neben einer Materialeinsparung wird auch die Produktionszeit der elektrischen Maschine verringert, da eine aufwendige Montage einer separaten Verrohrung eingespart wird.

Eine sichere und kontrollierte Verteilung der Spülluft kann in der Weise erfolgen, dass der Längsholm mindestens einen Lufteinlass zur Zufuhr von Spülluft und mindestens einen Luftauslass zur Luftabfuhr der Spülluft aufweist. Im Idealfall besitzt die elektrische Maschine nur einen Lufteinlass und einen Luftauslass, eine bisher erforderliche Zuführung der Spülluft über mehrere Ein- und Auslässe, die meist als aufwendig Kugelhahnventile ausgeführt sind, kann entfallen.

Eine sichere und gezielte Verteilung der Lustströme im Innern der elektrischen Maschine wird in der Weise sichergestellt, dass das Überdrucksystem und/oder der Hohlraum Lochblenden zur Mengenregulierung von Spülluft aufweist. Hierdurch kann der Luftstrom gezielt an in gewünschter Menge an die jeweilige Zielobjekte geführt werden.

Eine einfache, sichere und effiziente Verteilung der Spülluft im Innern der elektrischen Maschine wird dadurch erzielt, dass das Überdrucksystem flexible insbesondere metallische Leitungselemente, insbesondere Panzerschläuche zur Verteilung der Spülluft aufweist.

Im Folgenden wird die Erfindung anhand der in den Figuren dargestellten Ausführungsbeispiele näher beschrieben und erläutert.

Es zeigen:
- FIG 1: eine schematische Darstellung einer elektrischen Maschine mit Überdrucksystem,
- FIG 2: ein Ausführungsbeispiel einer elektrischen Maschine mit Überdrucksystem für eine Spülluftverteilung von Außen und
- FIG 3: ein Ausführungsbeispiel einer elektrischen Maschine mit Überdrucksystem für eine Spülluftverteilung als Innenausschnitt der elektrischen Maschine.

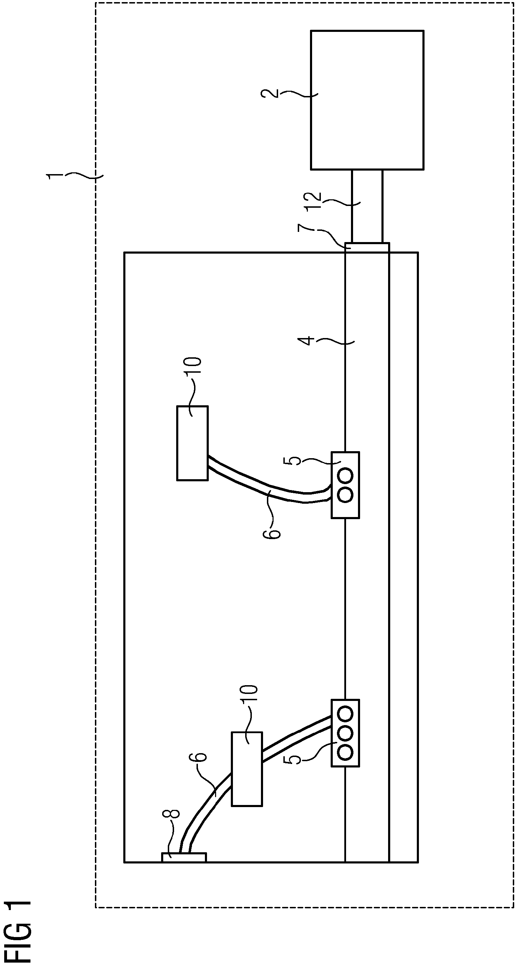

FIG 1 zeigt eine schematische Darstellung einer elektrischen Maschine mit Überdrucksystem. Die elektrische Maschine 1 ist in FIG 1 schematisch als rechteckiges Gebilde dargestellt. Das Überdrucksystem ist ebenfalls schematisch als Rechteck dargestellt. Die elektrische Maschine 1 weist einen Lufteinlass 7 auf, der mit den Überdrucksystem 2 über eine Rohrleitung 12 oder eine Schlauchleitung 12 verbunden ist, durch die Spülluft 9 zuführbar ist. Der Lufteinlass 7 ist im Bereich eines Hohlraums 4, beispielsweise eines Längsholms der elektrischen Maschine 1 vorgesehen, so dass die Spülluft 9 in diesen Hohlraum 4 zugeführt wird. Die elektrische Maschine 1 umfasst weiter einen Luftauslass 8, durch den die Spülluft 9 wieder entweichen kann. Für eine Verteilung der Spülluft 9 vom Hohlraum 4 zu weiteren Zielobjekten 10 sind Lochblenden 5 sowie Schläuche, insbesondere Panzerschläuche 6, vorgesehen.

Durch die Erfindung wird somit der Haupthohlraum 4, beispielsweise der Längsholm 4 der Maschine als Verteiler genutzt und die Lochblenden 5 übernehmen die Mengenregulierung der Spülluft 9. Für die Verteilung der Spülluft 9, z.B. in den Erregeranbau sowie die Kaltbereiche werden zusätzliche vorkonfektionierte Panzerschläuche 6 verwendet.

Durch die Integration der Verteilung in den Längsholm 4 der elektrischen Maschine 1 kann eine aufwändige zusätzliche teurere Verrohrung entfallen. Weiterhin entfallen auch die bisher bei separaten Installationen erforderlichen teuren Kugelhahnventile. Ein weiterer Vorteil ist der Entfall von Stolperfallen außerhalb der elektrischen Maschine 1 durch zusätzliche Verrohrungen. Durch die Lochblenden 5 mit vordefinierten Öffnungen entfällt die Gefahr der Fehleinstellung durch eine Verstellung von separaten Kugelhähnen. Neben der Materialkostenersparnis entsteht somit auch ein Gewinn an Durchlaufzeit bei der Produktion der elektrischen Maschine 1, da die Verrohrung bisher aufwändig während der Endmontage montiert und angepasst werden musste.

Ein weiterer Vorteil besteht darin, dass durch die Verwendung der elastischen Panzerschläuche zusätzliche Stahlrohre, insbesondere auch Edelstahlrohre, beispielsweise zum Erregerbereich entfallen. Somit wird auch die Gefahr von Kontaktkorrosion der Verrohrungen im Inneren der Maschine mit anderen Komponenten vermieden sowie auch eine Kollision möglicher Verrohrungen im Inneren der Maschine durch ein separates Spülluftverteilsystem.

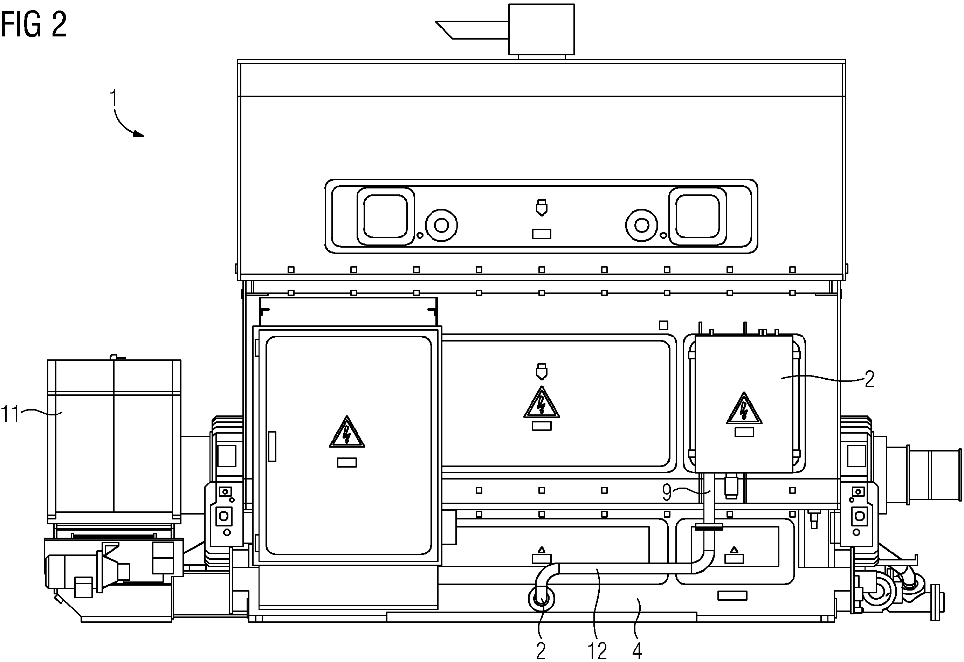

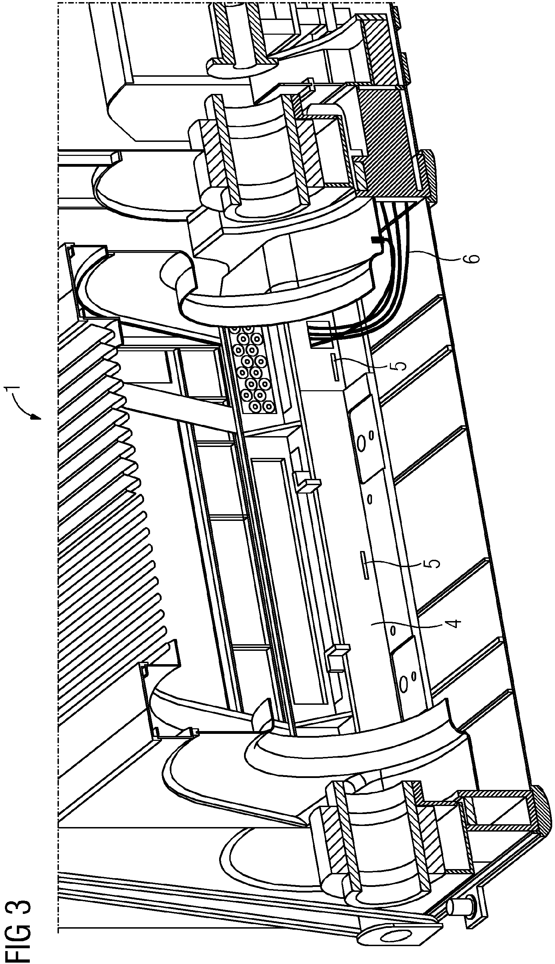

FIG 2 zeigt ein Ausführungsbeispiel einer elektrischen Maschine 1 von Außen mit Erregermaschine 11 sowie mit Überdrucksystem 2 für eine Spülluftverteilung. Hierbei werden die bereits im Zusammenhang mit FIG 1 eingeführten Bezugszeichen verwendet. Integriert in die elektrische Maschine 1 ist somit das Überdrucksystem 2 einschließlich des aus den Einzelkomponenten Rohrleitung 12, Längsholm 4, Lufteinlass7 sowie in Figur 2 nicht sichtbaren Innenkomponenten aus Lochblenden und Luftverteilschläuchen bestehenden Spülluftverteilsystems (vgl. FIG 3).

FIG 3 zeigt ein Ausführungsbeispiel einer elektrischen Maschine 1 mit Überdrucksystem 2 für eine Spülluftverteilung. Hierbei werden die bereits im Zusammenhang mit FIG 1 und FIG 2 eingeführten Bezugszeichen verwendet. In FIG 3 ist der Längsholm 4 im Schnitt erkennbar, durch den die Zufuhr der Spülluft 9 erfolgt. Ebenso gezeigt sind Panzerschläuche 6, für eine Weiterverteilung der Spülluft 9 sowie Lochblenden 5 für eine entsprechende Dosierung der Spülluft. Bezüglich der Vorteile wird auf die Ausführungen zu FIG 1 verwiesen.

Zusammenfassend betrifft die Erfindung somit eine elektrische Maschine 1 insbesondere für den Einsatz in explosionsgefährdetem Bereichen mit einem Überdrucksystem 2 zum Herausdrücken von zündfähigen Gasen aus einem Innenraum 3 der elektrischen Maschine 1. Für eine aufwandsarme Realisierung des Überdrucksystems 1 wird vorgeschlagen, dass das Überdrucksystem 2 mindestens einen Hohlraum der elektrischen Maschine 1 der elektrischen Maschine 1 umfasst. Bei einer vorteilhaften Ausgestaltungsform umfasst das Überdrucksystem 2 den Längsholm 4 der elektrischen Maschine 1.

## Patentansprüche

1. Elektrische Maschine (1) insbesondere für den Einsatz in explosionsgefährdeten Bereichen mit einem Überdrucksystem (2) zum Herausdrücken von zündfähigen Gasen aus einem Innenraum (3) der elektrischen Maschine (1), wobei das Überdrucksystem (2) mindestens einen Hohlraum (4) der elektrischen Maschine (1) umfasst.

2. Elektrische Maschine (1) nach Anspruch 1, wobei das Überdrucksystem (2) den Längsholm (4) der elektrischen Maschine (1) umfasst.

3. Elektrische Maschine (1) nach einem der Ansprüche 1 oder 2, wobei der Längsholm mindestens einen Lufteinlass (7) zur Zufuhr von Spülluft (9) und mindestens einen Luftauslass (8) zur Abfuhr der Spülluft (9) aufweist.

4. Elektrische Maschine (1) nach einem der Ansprüche 1 bis 3, wobei das Überdrucksystem (2) und/oder der Hohlraum (4) Lochblenden (5) zur Mengenregulierung von Spülluft (9) aufweist.

5. Elektrische Maschine (1) nach einem der Ansprüche 1 bis 4, wobei das Überdrucksystem (2) Panzerschläuche (6) zur Verteilung der Spülluft (9) aufweist.

6. Verfahren zur Verteilung von Spülluft innerhalb einer elektrischen Maschine (1) insbesondere für den Einsatz in explosionsgefährdeten Bereichen, wobei mittels eines Überdrucksystems (2), insbesondere zündfähige, Gase aus einem Innenraum (3) der elektrischen Maschine (1) herausgedrückt werden, wobei das Überdrucksystem (2) mindestens einen Hohlraum der elektrischen Maschine (1) als Spülluftverteilung nutzt.

7. Verfahren nach Anspruch 6, wobei das Überdrucksystem (2) den Längsholm (4) der elektrischen Maschine (1) umfasst.

8. Verfahren nach einem der Ansprüche 6 oder 7, wobei der Längsholm mindestens einen Lufteinlass (7) zur Zufuhr von Spülluft und mindestens einen Luftauslass (8) zur Abfuhr der Spülluft (9) aufweist.

9. Verfahren nach einem der Ansprüche 6 bis 7, wobei das Überdrucksystem (2) Lochblenden (5) zur Mengenregulierung von Spülluft (9) nutzt.

10. Verfahren nach einem der Ansprüche 6 bis 9, wobei das Überdrucksystem (2) Panzerschläuche (6) zur Verteilung der Spülluft nutzt.
